# EUROPEAN PATENT APPLICATION

(11) **EP 4 462 384 A1**
(43) Date of publication of application: **13.11.2024**
(21) Application number: 23864090.8
(22) Date of filing: 21.02.2023
(51) Int. Cl.: G06V 20/60

(54) **COMMODITY RECOGNITION APPARATUS AND METHOD**

(71) Applicant: Hanshow Technology Co., Ltd., Jiaxing, Zhejiang 314031 (CN)
(72) Inventor: HUANG, Sheng, Jiaxing Zhejiang 314031 (CN); ZHUANG, Yitang, Jiaxing Zhejiang 314031 (CN); HOU, Shiguo, Jiaxing Zhejiang 314031 (CN); SHEN, Ming, Jiaxing Zhejiang 314031 (CN)
(74) Representative: Boult Wade Tennant LLP
(86) International application number: PCT/CN2023/077305
(87) International publication number: WO 2024/174076

(57) **Abstract**

The present disclosure discloses a product recognition apparatus and method, in which the apparatus includes: a vision sensor configured to obtain and transmit image information of a product to an arithmetic processing unit; the arithmetic processing unit configured to deal the image information of the product based on an image recognition model, to obtain and transmit category information of the product to a data transceiver, and the image recognition model is obtained by training a machine learning model with image information of different products and actual category information corresponding thereto; and the data transceiver configured to transmit the category information of the product to a backend server of a seller, so that the backend server of the seller makes a settlement based on the category information of the product and preset price information of different categories of products. By adopting the product recognition apparatus, it is possible to quickly recognize the categories of various products, increase efficiency and accuracy of the cashing, and improve the user experiences.

## Description

### TECHNICAL FIELD

The present disclosure relates to the technical field of artificial intelligence, and particularly to a product recognition apparatus and method.

### BACKGROUND

This section is intended to provide a background or context for the embodiments of the present disclosure set forth in the claims. The description here is not admitted to be the prior art by virtue of its inclusion in this section.

In the field of offline product sales, the primary payment method is to recognize a product category by scanning a product barcode, and subsequently processing the transaction. Most of the existing conventional cashier devices only support the settlement of products with barcodes, while non-standard products without product barcodes, such as fruits, vegetables and bulk goods, may require special and additional devices for recognition and settlement, or the product category is directly determined artificially to make a product settlement, which is cumbersome and increases the checkout time cost of customers and clerks, and the artificial determination is prone to errors.

At present, there is no effective solution to the above problems.

### SUMMARY

The embodiments of the present disclosure provide a product recognition apparatus, so as to quickly recognize the categories of various products, increase efficiency and accuracy of the cashing, and improve the user experiences, the apparatus including:
a vision sensor configured to obtain and transmit image information of a product to an arithmetic processing unit;
the arithmetic processing unit configured to recognize the image information of the product based on an image recognition model, to obtain and transmit category information of the product to a data transceiver, wherein the image recognition model is obtained by training a machine learning model with image information of different products and actual category information corresponding thereto; and
the data transceiver configured to transmit the category information of the product to a seller's backend server, so that the backend server of the seller makes a settlement based on the category information of the product and pre-set price information of different categories of products.

The embodiments of the present disclosure further provide a product recognition method, so as to quickly recognize the categories of various products, increase efficiency and accuracy of the cashing, and improve the user experiences, the method including:
receiving image information of a product obtained by a vision sensor;
inputting the image information of the product into an image recognition model and outputting category information of the product, in which the image recognition model is obtained by training a machine learning model with image information of different products and actual category information corresponding thereto; and
transmitting the category information of the product to a data transceiver to transmit the category information of the product to a backend server of a seller, so that the backend server of the seller makes a settlement based on the category information of the product and preset price information of different categories of products.

The embodiments of the present disclosure further provide a computer device, including a memory, a processor and a computer program stored in the memory and executable on the processor, and when executing the computer program, the processor implements the aforementioned product recognition method.

The embodiments of the present disclosure further provide a computer-readable storage medium which stores a computer program, and when executed by a processor, the computer program, implements the aforementioned product recognition method.

The embodiments of the present disclosure further provide a computer program product, including a computer program which, when executed by a processor, implements the aforementioned product recognition method.

In the embodiments of the present disclosure, the product recognition apparatus mainly includes: a vision sensor configured to obtain and transmit image information of a product to an arithmetic processor; the arithmetic processor configured to deal the image information of the product based on an image recognition model, to obtain and transmit category information of the product to a data transceiver, in which the image recognition model is obtained by training a machine learning model with image information of different products and actual category information corresponding thereto; and the data transceiver configured to transmit the category information of the product to a backend server of a seller, so that the backend server of the seller makes a settlement based on the category information of the product and preset price information of different categories of products. By configuring with the product recognition apparatus, it is possible to quickly recognize the categories of various products, increase efficiency and accuracy of the cashing, and improve the user experiences.

### BRIEF DESCRIPTION OF THE DRAWINGS

In order to more clearly illustrate the technical solutions in the embodiments of the present disclosure or in the prior art, the drawings to be used in the description of the embodiments or the prior art will be briefly introduced as follows. Obviously, the drawings used in the following description only illustrate some embodiments of the present disclosure, and those of ordinary skill in the art may obtain other drawings from them without paying any creative effort. In the drawings:
FIG. 1 illustrates a structural block diagram of a product recognition apparatus according to an embodiment of the present disclosure;
FIG. 2 illustrates a structural block diagram of an example of a product recognition apparatus according to an embodiment of the present disclosure;
FIG. 3 illustrates a structural block diagram of an example of a product recognition apparatus according to an embodiment of the present disclosure;
FIG. 4 illustrates a processing flowchart of a product recognition method according to an embodiment of the present disclosure;
FIG. 5 illustrates a method flowchart of a training and testing process of an image recognition model according to an embodiment of the present disclosure;
FIG. 6 illustrates a schematic structural diagram of a computer device according to an embodiment of the present disclosure.

### DETAILED DESCRIPTION

In order that the objectives, technical solutions and advantages of the embodiments of the present disclosure are clearer, the embodiments of the present disclosure will be further illustrated in detail below with reference to the drawings. Here, the exemplary embodiments of the present disclosure and the description thereof are used to illustrate the present disclosure, but are not intended to limit the present disclosure.

The inventor finds that in the field of offline product sales, the main settlement method is to recognize a product category by scanning a product barcode, and then make a product settlement. Most of the existing conventional cashier devices only support the settlement of products with barcodes, while non-standard products without product barcodes, such as fruits, vegetables and bulk goods, may require special and additional devices for recognition and settlement, or the product category is directly determined artificially to make a product settlement, which is cumbersome and increases the checkout time cost of customers and clerks, and the artificial determination is prone to errors. Therefore, the inventor proposes a product recognition apparatus to solve such problem.

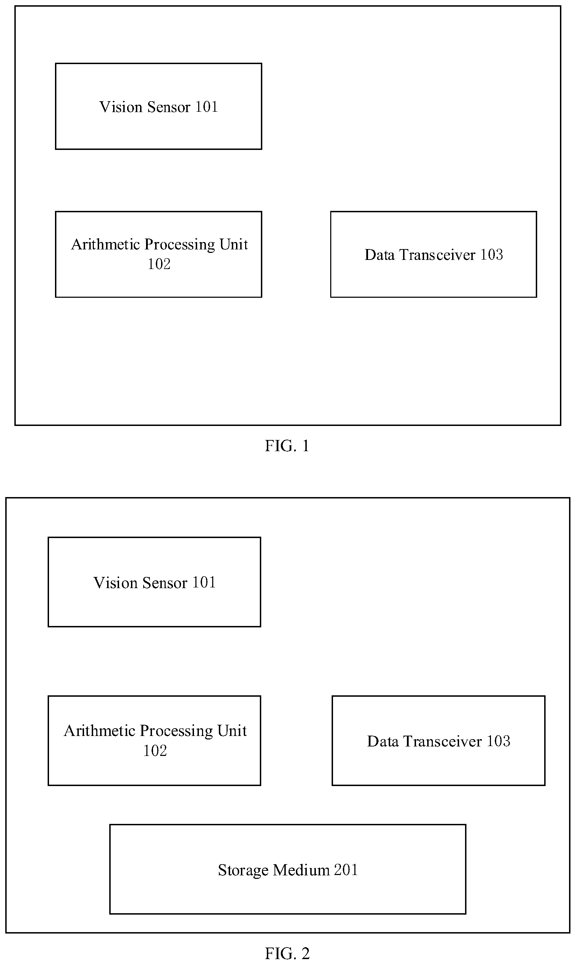

FIG. 1 illustrates a structural block diagram of a product recognition apparatus according to an embodiment of the present disclosure. As illustrated in FIG. 1, the product recognition apparatus according to the embodiment of the present disclosure may include:
a vision sensor 101 configured to obtain and transmit image information of a product to an arithmetic processing unit;
the arithmetic processing unit 102 configured to recognize the image information of the product based on an image recognition model, to obtain and transmit category information of the product to a data transceiver, in which the image recognition model is obtained by training a machine learning model based on image information of different products and actual category information corresponding thereto; and
the data transceiver 103 configured to transmit the category information of the product to a backend server of a seller, so that the backend server of the seller makes a settlement based on the category information of the product and preset price information of different categories of products.

In the embodiment of the present disclosure, the appearance of the product recognition apparatus may be an independent hardware device with plug-and-play, in which internal functions realized by the combination of software and hardware. The independent hardware device independently completes capturing and a category recognition of visual images, a transmission of a category recognition result, and a reception of an external feedback signal, etc., and may also be connected to an external settlement system device (e.g., the backend server of the seller) via a data interface to transmit the recognition result thereto, and endow the settlement system device with a product recognition function externally mounted.

The product recognition apparatus according to the embodiment of the present disclosure may include a vision sensor, an arithmetic processing unit and a data transceiver, and each part of the product recognition apparatus is specifically introduced as follows:

The vision sensor is configured to obtain and transmit image information of a product to the arithmetic processing unit. In the embodiment, it is possible to obtain the image information of one product independently, or the image information of a plurality of products simultaneously.

The arithmetic processing unit is configured to recognize the image information of the product based on an image recognition model, to obtain and transmit product information to the data transceiver; in which the image recognition model is obtained by training a machine learning model with image information of different products and actual category information corresponding thereto;

In an embodiment, the arithmetic processing unit may include an AI chip. The arithmetic processing unit operates software and perform recognition-related computations, and may also include an AI chip capable of operating an artificial neural network model.

In an embodiment, before recognizing the image information of the product based on the image recognition model, the arithmetic processing unit is further configured to perform a target detection on the image information of the product using a one-stage detector or a two-stage detector.

In an embodiment, before recognizing the image information of the product based on the image recognition model, the arithmetic processing unit is further configured to perform an image segmentation on the image information of the product using an instance segmentation algorithm or a semantic segmentation algorithm.

During implementations, before the image information of the product is recognized, various digital image dealing algorithms may be adopted to perform a target detection and/or segmentation on the image information of the product, i.e., the image information of the product is preprocessed, which is beneficial to improving the product recognition accuracy of the image recognition model.

The data transceiver is configured to transmit the product information to a backend server of a seller, so that the backend server of the seller makes a settlement based on the product information.

In an embodiment, the data transceiver may include USB wiring, TypeC wiring or a wireless network communication device. During implementations, the data transceiver serves to transmit a product recognition result or receive external feedback information.

FIG. 2 illustrates a structural block diagram of an example of a product recognition apparatus according to an embodiment of the present disclosure. As illustrated in FIG. 2, in this embodiment, the product recognition apparatus illustrated in FIG. 1 may further include a storage medium 201, which is connected to the vision sensor and the arithmetic processing unit respectively, and the storage medium 201 may be configured to store the image information of the product, the category information of the product and configuration information of the image recognition model.

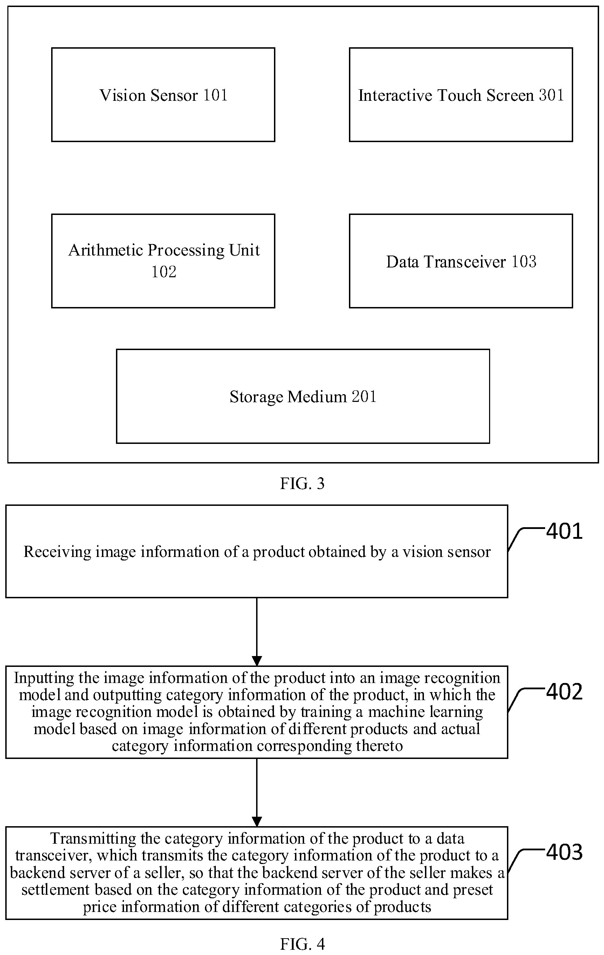

FIG. 3 illustrates a structural block diagram of an example of a product recognition apparatus according to an embodiment of the present disclosure. As illustrated in FIG. 3, in this embodiment, the product recognition apparatus illustrated in FIG. 1 may further include an interactive touch screen 301, which is connected to the data transceiver, and may be configured to provide visual and clickable product category information.

During implementations, when the product recognition apparatus simultaneously obtains a plurality of recognition results for the image information of the same product, i.e., the unique recognition result for product cannot be determined, the plurality of recognition results may be provided to the seller or the buyer via the interactive touch screen for selection, and then the seller or the buyer selects the correct product recognition result via the interactive touch screen, which is beneficial to ensuring the correctness of product identification, thereby ensuring the accuracy of the product settlement amount and avoiding the loss of users.

For example, in a case where the product to be settled is a raisin, since the image information of a grape and a raisin is very similar, if the product recognition apparatus simultaneously obtains two recognition results, i.e., the grape and the raisin, firstly the two recognition results are displayed by the interactive touch screen, and the seller or the buyer selects a correct product category (raisin) by clicking, and then the data transceiver transmits the correct product category (raisin) to the backend server of the seller, so that the backend server of the seller makes a settlement based on pre-stored price information of the raisin.

In an embodiment, the arithmetic processing unit is further configured to receive an operation instruction issued by the backend server of the seller via the data transceiver, and perform a corresponding operation according to the operation instruction, and the operation instruction includes re-recognizing a category of a product and simultaneously recognizing categories of a plurality of products.

During implementations, a salesman may not recognize a product due to the incomplete image information of the product obtained using the vision sensor or other improper operations. At this time, the salesman may issue an operation instruction to re-recognize the product via the data transceiver, and the arithmetic processing unit may re-recognize the product according to the operation instruction.

In addition, in order to improve the cashing efficiency when the buyer purchases a variety of products simultaneously, the salesman may issue an operation instruction to recognize a plurality of products simultaneously via the data transceiver, and the arithmetic processing unit may recognize a plurality of products simultaneously according to the operation instruction.

The present disclosure has the following advantageous effects:
1) The product recognition apparatus can effectively use visual image information and an artificial intelligence algorithm to automatically recognize products without relying on product barcodes, thereby improving the cashing and settlement efficiency of products, especially for non-standard products without barcodes.
2) The product recognition apparatus of the present disclosure is plug-and-play, which can endow the conventional settlement system device with an externally mounted product recognition function, thereby quickly and flexibly improving the performance of the existing cashier device, and reducing the transformation cost thereof.

The embodiments of the present disclosure further provide a product recognition method, as described in the following embodiments. Since the principle for the apparatus to solve the above problem is similar to that of the product recognition method, the implementation of the apparatus may refer to the implementation of the product recognition apparatus, and the repeated content is omitted here.

FIG. 4 illustrates a processing flowchart of a product recognition method according to an embodiment of the present disclosure, which is applied to the arithmetic processing unit in the aforementioned product recognition apparatus. As illustrated in FIG. 4, the product recognition method according to the embodiment of the present disclosure may include:
Step 401: receiving image information of a product obtained by a vision sensor;
Step 402: inputting the image information of the product into an image recognition model and outputting category information of the product, in which the image recognition model is obtained by training a machine learning model based on image information of different products and actual category information corresponding thereto; and
Step 403: transmitting the category information of the product to a data transceiver, which transmits the category information of the product to a backend server of a seller, so that the backend server of the seller makes a settlement based on the category information of the product and preset price information of different categories of products.

In an embodiment, the arithmetic processing unit includes an AI chip.

In an embodiment, before recognizing the image information of the product based on the image recognition model, the method further includes: performing a target detection on the image information of the product using a one-stage detector or a two-stage detector.

In an embodiment, before recognizing the image information of the product based on the image recognition model, the method further includes: performing an image segmentation on the image information of the product using an instance segmentation algorithm or a semantic segmentation algorithm.

In an embodiment, the data transceiver includes USB wiring, TypeC wiring or a wireless network communication device.

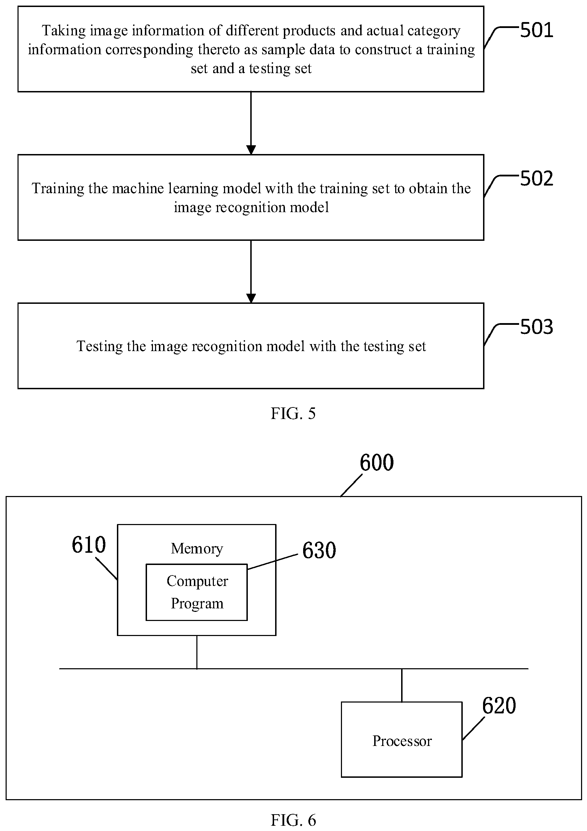

FIG. 5 illustrates a method flowchart of a training and testing process of an image recognition model according to an embodiment of the present disclosure. As illustrated in FIG. 5, in an embodiment, the training and testing process of the image recognition model includes:
Step 501: taking image information of different products and actual category information corresponding thereto as sample data to construct a training set and a testing set;
Step 502: training the machine learning model with the training set to obtain the image recognition model; and
Step 503: testing the image recognition model with the testing set.

In an embodiment, the product recognition method further includes: receiving an operation instruction issued by the backend server of the seller via the data transceiver, and performing a corresponding operation according to the operation instruction, and the operation instruction includes re-recognizing a category of a product and simultaneously recognizing categories of a plurality of products.

Based on the aforementioned disclosure concept, as illustrated in FIG. 6, the present disclosure further provides a computer device 600, including a memory 610, a processor 620 and a computer program 630 stored in the memory 610 and executable on the processor 620, and when executing the computer program 630, the processor 620 implements the aforementioned product recognition method.

The embodiments of the present disclosure further provide a computer-readable storage medium which stores a computer program, and when executed by a processor, the computer program, implements the aforementioned product recognition method.

The embodiments of the present disclosure further provide a computer program product, including a computer program which, when executed by a processor, implements the aforementioned product recognition method.

To sum up, in the embodiments of the present disclosure, the product recognition apparatus mainly includes: a vision sensor configured to obtain and transmit image information of a product to an arithmetic processing unit; the arithmetic processing unit configured to recognize the image information of the product based on an image recognition model, to obtain and transmit category information of the product to a data transceiver, and the image recognition model is obtained by training a machine learning model with image information of different products and actual category information corresponding thereto; and the data transceiver configured to transmit the category information of the product to a backend server of a seller, so that the backend server of the seller makes a settlement based on the category information of the product and preset price information of different categories of products. By configuring with the product recognition apparatus, it is possible to quickly recognize the categories of various products, increase efficiency and accuracy of the cashing, and improve the user experiences.

Those skilled in the art should appreciate that any embodiment of the present disclosure may be provided as a method, a system or a computer program product. Therefore, the present disclosure may take the form of a full hardware embodiment, a full software embodiment, or an embodiment combining software and hardware. Moreover, the present disclosure may take the form of a computer program product implemented on one or more computer usable storage mediums (including, but not limited to, a magnetic disc memory, CD-ROM, optical storage, etc.) containing therein computer usable program codes.

The present disclosure is described with reference to a flow diagram and/or a block diagram of the method, apparatus (system) and computer program product according to the embodiments of the present disclosure. It should be appreciated that each flow and/or block in the flow diagram and/or the block diagram and a combination of flows and/or blocks in the flow diagram and/or the block diagram may be implemented by computer program instructions. Those computer program instructions may be provided to a general computer, a dedicated computer, an embedded processor or a processor of other programmable data processing device to produce a machine, so that the instructions executed by the processor of the computer or other programmable data processing device produce means for realizing specified functions in one or more flows in the flow diagram and/or one or more blocks in the block diagram.

These computer program instructions may also be stored in a computer readable memory capable of guiding the computer or other programmable data processing devices to work in a particular manner, so that the instructions stored in the computer readable memory produces manufacture articles including an instructing device which realizes function(s) specified in one or more flows in the flow diagram and/or one or more blocks in the block diagram.

These computer program instructions may also be loaded onto the computer or other programmable data processing devices, so that a series of operation steps are performed on the computer or other programmable data processing devices to produce a processing realized by the computer, thus the instructions executed on the computer or other programmable devices provide step(s) for realizing function(s) specified in one or more flows in the flow diagram and/or one or more blocks in the block diagram.

The above specific embodiments further illustrate the objectives, technical solutions and advantageous effects of the present disclosure in detail. As should be understood, those described above are merely specific embodiments of the present disclosure, and are not intended to limit the protection scope of the present disclosure. Any modification, equivalent substitution, improvement, etc. made within the spirit and principle of the present disclosure should be included in the protection scope of the present disclosure.

## Claims

1. A product recognition apparatus, comprising:
a vision sensor configured to obtain and transmit image information of a product to an arithmetic processing unit;
the arithmetic processing unit configured to recognize the image information of the product based on an image recognition model, to obtain and transmit category information of the product to a data transceiver, wherein the image recognition model is obtained by training a machine learning model based on image information of different products and actual category information corresponding thereto; and
the data transceiver configured to transmit the category information of the product to a backend server of a seller, so that the backend server of the seller makes a settlement based on the category information of the product and preset price information of different categories of products.

2. The product recognition apparatus according to claim 1, wherein the arithmetic processing unit comprises an AI chip.

3. The product recognition apparatus according to claim 1, wherein before recognizing the image information of the product based on the image recognition model, the arithmetic processing unit is further configured to:
perform a target detection on the image information of the product using a one-stage detector or a two-stage detector.

4. The product recognition apparatus according to claim 1, wherein before recognizing the image information of the product based on the image recognition model, the arithmetic processing unit is further configured to:
perform an image segmentation on the image information of the product using an instance segmentation algorithm or a semantic segmentation algorithm.

5. The product recognition apparatus according to claim 1, wherein the data transceiver comprises:
USB wiring, TypeC wiring or a wireless network communication device.

6. The product recognition apparatus according to claim 1, further comprising: a storage medium, which is respectively connected to the vision sensor and the arithmetic processing unit, and configured to store the image information of the product, the category information of the product and configuration information of the image recognition model.

7. The product recognition apparatus according to claim 1, further comprising: an interactive touch screen, which is connected to the data transceiver, and configured to provide visual and clickable product category information.

8. The product recognition apparatus according to claim 1, wherein the arithmetic processing unit is further configured to:
receive an operation instruction issued by the backend server of the seller via the data transceiver, and perform a corresponding operation according to the operation instruction, wherein the operation instruction comprises re-recognizing a category of a product and simultaneously recognizing categories of a plurality of products.

9. A product recognition method which is applied to an arithmetic processing unit, comprising:
receiving image information of a product obtained by a vision sensor;
inputting the image information of the product into an image recognition model and outputting category information of the product, wherein the image recognition model is obtained by training a machine learning model based on image information of different products and actual category information corresponding thereto; and
transmitting the category information of the product to a data transceiver to transmit the category information of the product to a backend server of a seller, so that the backend server of the seller makes a settlement based on the category information of the product and preset price information of different categories of products.

10. The product recognition method according to claim 9, wherein the arithmetic processing unit comprises an AI chip.

11. The product recognition method according to claim 9, wherein before recognizing the image information of the product based on the image recognition model, the method further comprises:
performing a target detection on the image information of the product using a one-stage detector or a two-stage detector.

12. The product recognition method according to claim 9, wherein before recognizing the image information of the product based on the image recognition model, the method further comprises:
performing an image segmentation on the image information of the product using an instance segmentation algorithm or a semantic segmentation algorithm.

13. The product recognition method according to claim 9, wherein the data transceiver comprises:
USB wiring, TypeC wiring or a wireless network communication device.

14. The product recognition method according to claim 9, wherein the training and testing process of the image recognition model comprises:
taking image information of different products and actual category information corresponding thereto as sample data to construct a training set and a testing set;
training the machine learning model with the training set to obtain the image recognition model; and
testing the image recognition model with the testing set.

15. The product recognition method according to claim 9, further comprising:
receiving an operation instruction issued by the backend server of the seller via the data transceiver, and performing a corresponding operation according to the operation instruction, wherein the operation instruction comprises re-recognizing a category of a product and simultaneously recognizing categories of a plurality of products.

16. A computer program product, comprising a computer program which, when executed by a processor, implements the method according to claim 9.
